# EUROPEAN PATENT SPECIFICATION

(11) **EP 4 439 350 B1**
(45) Date of publication and mention of the grant of the patent: **17.09.2025**
(21) Application number: 23165335.3
(22) Date of filing: 30.03.2023
(51) Int. Cl.: G06F 21/55, G06F 21/56, G06F 21/52

(54) **INTRUSION DETECTION METHOD**
EINDRINGDETEKTIONSVERFAHREN
PROCÉDÉ DE DÉTECTION D'INTRUSION

(43) Date of publication of application: 02.10.2024
(73) Proprietor: OMRON Corporation, Kyoto 600-8530 (JP)
(72) Inventor: NOOIJENS, Niek, 5234 GM 's-Hertogenbosch (NL); TONKS, Wendy, 5234 GM 's-Hertogenbosch (NL); LAMMERTINK, Jeroen, 5234 GM 's-Hertogenbosch (NL)
(74) Representative: HKW Intellectual Property PartG mbB

(56) References cited:
- US-A1- 2016 275 289
- US-A1- 2019 340 392
- US-B1- 8 171 545

## Description

The present invention relates to a method for detecting an intrusion into an industrial control system, that includes an industrial control program and an industrial control device configured for a cycle-based execution of the industrial control program. Further, the present invention relates to a method for operating a set of industrial control devices, a method for training a data set for detecting an intrusion, a trained data set for detecting an intrusion, and a method for operating an industrial control system. The present invention also relates to a computer program product for each of these methods.

In industrial environments often industrial control systems are used for industrial controlling, such as controlling a production system, controlling an experiment, controlling infrastructure, controlling some combination thereof, and/or the like. Thus, industrial control systems constitute targets for intrudes, for example aiming towards gaining information, making money, and/or disrupting service.

An intrusion into an industrial control system, or a "hack" as it is often referred to, usually has three consecutive stages. First, an attacker may exploit a vulnerability of the industrial control system to alter an execution flow to perform an attacker's code. Examples comprise: a buffer overflow, overwriting a return address, and/or overwriting a pointer, such as a vtable pointer. Then, the attacker may try to escalate privileges to increasingly gain control over the industrial control system. Further, the attacker may try to gain persistence on the industrial control device. Examples comprise: nesting a malware into a start-up procedure of the industrial control device and/or installing one or more so-called backdoors.

There are known intrusion detection devices. For example, document US 2020 364 332 A1 discloses a security monitoring device that can be externally attached to a control device having a program execution module that executes a program produced in accordance with a control target, the security monitoring device comprising: a communication port for connection with the control device; a detection module that determines whether or not a security event is generated in access from outside to the control device, from a content of communication; and a notification module that provides a notification, upon detection of generation of the security event, to a notification destination corresponding to the generated security event, the security event including an event that does not conform to a predetermined rule.

As another example, document US 2021 075 801 A1 discloses a control device that controls a control target, the control device comprising: a first unit including a program execution module that executes a program created depending on the control target; a second unit including a detection module that determines whether a security event occurs in access from outside to the control device; and a notification module that provides a notification, upon detection of occurrence of the security event, to a notification destination corresponding to the occurred security event, the first unit having a port for network connection, the security event including that, when the port of the first unit is disabled, the port is network-connected. This control device detects a network traffic after a successful intrusion.

As another example, document EP 3 982 212 A1 discloses a control system for controlling a control target, the control system comprising: a control engine configured to cyclically update an internal state value on the basis of a signal exchanged with the control target; a security engine configured to execute an incident response operation in response to an incident that possibly occurs in the control system; and a phase update means configured to update a value of a phase indicating an operation state of the control target on the basis of one or more values discretionarily selected in advance by a user from the internal state value retained by the control engine and an internal state value retained by the security engine, wherein the security engine includes a means configured to retain operation definition information in which content of the incident response operation is defined for each phase, and an execution means configured to execute a corresponding incident response operation defined in the operation definition information according to the value of the phase updated by the phase update means.

Document US 2019 / 340 392 A1 discloses collecting HPC measurements. HPC means hardware performance counter, which are processor activity counters implemented in processors. The measurements are read out by a software called TRACE. TRACE uses time series of real-time measurements. The HPC measurements for a control logic process are collected as time series with separate measurements for each thread in the control logic process. Then, the time series are investigates using various types of timedomain and frequency-domain feature descriptor characterizations.

Document US 2016 / 275 289 A1 discloses another HPC-based malware detection, but for a personal computer running software like Internet Explorer, Flash, Java, Adobe PDF and Windows Media Player. Collected hardware performance data may include processor load density data. A subset of hardware performance data may be collected for events/features whose corresponding hardware performance measurements generally can show a distinction. Then, it is determined whether a malware affects performance by a machine learning system using classifiers that are trained using non-infected hardware performance data.

Document US 8 171 545 B1 also relates to software executed on a personal computer in a Microsoft Windows or Unix environment. Here, a per process statistics on resource utilization is collected per time period T1, and it is maintained for a history window T3. Each time period T2, it is checked if an average behavior of a specific process over the most recent T2 interval is within T3 standards.

However, the above intrusion detection devices are limited regarding their detection precision.

It is one object of the present invention to provide an intrusion detection solution that is able to detect an intrusion with increased precision.

Accordingly, a method for detecting an intrusion into an industrial control system, that includes an industrial control program and an industrial control device, which is configured for a cycle-based execution of the industrial control program, is suggested. The method includes providing a trained data set, which is trained based on multiple previous records, each record including: an identifier indicative of a respective process of the industrial control program and a duration of the process indicated by the identifier. The data set is configured to output an expected duration of a process in response to a query including the respective identifier. The method further includes performing for each process of the industrial control program in each cycle of an execution of the industrial control program: a) recording an identifier indicative of the process; b) recording a duration of the execution of the process; c) querying the recorded identifier to the data set; d) receiving from the data set an expected duration for the recorded identifier; and e) detecting an intrusion into the industrial control system based on comparing of the recorded duration with the expected duration.

Exploiting vulnerabilities during an exploitation stage of an attack inevitably changes the content of a memory in order to alter an execution flow. This affects the duration of executing at least one of the processes. Thus, the suggested method is able to decide for each process whether there is an anomality indicating an intrusion into the industrial control system. The same holds true for the attack stages of escalating privileges and gaining persistence, as these steps, too, require deviations in the execution flow and - at the same time - consume computation time. Thus, the suggested method is able to detect an intrusion into the industrial control system with increased precision.

An industrial control system has at least an industrial control device and an industrial control program. The industrial control device is preferably configured to perform at least one industrial control task (in most cases a whole closed control loop will not be implemented within a single device). Preferred examples for the industrial control device comprise a programmable logic controller device (PLC), an industrial personal computer device (IPC), a sensor device, a programmable sensor device, a sensor device configured for evaluating sensor data, a sensor device configured for network communication, a driver device configured for driving an actuator, a programmable driver device, a driver device configured for network communication, a programmable actuator device, an actuator device configured for network communication, and/or a combination thereof.

Optionally, the method may include executing the industrial control program. Thus, the method can for example have full control of the industrial control program.

Optionally, the method may be executed by the industrial control program. Thus, the method may for example be implemented to selectively supervise only vulnerable processes.

Optionally, the method may be executed in parallel to the industrial control program. Thus, the method may for example be independent from the industrial control program under attack.

Optionally, a process may have an execution of a sequence of functions and/or, preferably, have an execution of a single function. A process preferably is a part of an execution of a program or software. A function preferably is a written and/or implemented part of a program or software. If a process has an execution of a sequence of functions, then a number of processes to be recorded and supervised is reduced, which e.g. can reduce a workload of a processor. If a process has an execution of a single function, the intrusion detection can be very sensitive for this particular function, for example. If every process has an execution of a single, then the intrusion detection as a whole can be very sensitive, for example.

According to a preferred option, the multiple previous records, on which training (S243) the trained data set is based, each additionally includes at least one of the following process information: an input data to the process indicated by the identifier, a parent indicator indicative of at least a parent process of the process indicated by the identifier, an interrupt indicator indicative of whether the process indicated by the identifier has been terminated by an interrupt signal, an execution permission indicator indicative of a user owning the process and/or an execution permission granted to the process indicated by the identifier, and/or a filesystem permission indicator indicative of a filesystem writing permission granted to the process indicated by the identifier. Further, according to this option, the trained data set is configured to output the expected duration in response to an query including a record including the at least one additional process information; wherein the recording includes recording the at least one additional process information; and wherein the query includes the at least one additional process information. This option advantageously reflects variations in the execution flow, which impact a process duration. These additional process information have in common, that a process duration can more precisely be estimated, if the method is based on this process information, too. The more of these process information are used for estimating the process duration, the more precise the detection will get. The more precise the method detects an anormal process duration, the better a quota of correct intrusion detections becomes.

Preferably, the multiple previous records each include input data to the process indicated by the identifier; wherein the trained data set is configured to output the expected duration in response to a query including the input data to the process indicated by the identifier; wherein the recording includes recording the input data to the process indicated by the identifier; and wherein the query includes the recorded input data. Thus, a duration of the process can be estimated with increased precision.

The input data may respectively include a source of the input data, a type of the input data and/or a corresponding value of the input data. Again, each of these features can additionally increase a precision of the predicted process duration.

Preferably, the multiple previous each include a parent indicator indicative of at least a parent process of the process indicated by the identifier; wherein the trained data set is configured to output the expected duration in response to a query including the parent indicator indicative of at least a parent process of the process indicated by the identifier; wherein the recording includes recording the parent indicator indicative of at least a parent process of the process indicated by the identifier; and wherein the query includes the recorded parent indicator. Thus, a duration of the process can be estimated with increased precision.

A parent process may preferably be a direct parent process and/or a process which called this process. Thus, the duration prediction can distinguish a source in the execution flow. This can be useful for example in a case where a certain function is called more than one time from different functions within the industrial control program.

Optionally, the parent indicator may be indicative of a respective parent stack. A parent stack may preferably be a hierarchical list of respective call functions. Thus, the duration prediction can distinguish a complete path or stack up to the recorded process. This can be useful for example in a case where at least one functions is called many times from different functions within the industrial control program.

Preferably, a parent process may be a calling function, and a parent indicator may be a call indicator. A calling function may preferably be another function or another instance of the same function, from where this function, which is the recorded function, is called.

Preferably, the multiple previous each include an interrupt indicator indicative of whether the process indicated by the identifier has been terminated by an interrupt signal; wherein the trained data set is configured to output the expected duration in response to a query including the interrupt indicator indicative of whether the process indicated by the identifier has been terminated by an interrupt signal; wherein the recording includes recording the interrupt indicator indicative of whether the process indicated by the identifier has been terminated by an interrupt signal; and wherein the query includes the recorded interrupt indicator. Thus, a duration of the process can be estimated with increased precision.

The indicator may be indicative of a value of the interrupt signal and/or of a source of the interrupt signal. Again, each of these features can additionally increase a precision of the predicted process duration.

Preferably, the multiple previous records each include an execution permission indicator indicative of a user owning the process indicated by the identifier and/or an execution permission granted to the process indicated by the identifier; wherein the trained data set is configured to output the expected duration in response to a query including the execution permission indicator indicative of a user owning the process indicated by the identifier and/or an execution permission granted to the process indicated by the identifier; wherein the recording includes recording the an execution permission indicator indicative of a user owning the process indicated by the identifier and/or an execution permission granted to the process indicated by the identifier; and wherein the query includes the recorded execution permission indicator. Thus, a duration of the process can be estimated with increased precision.

Preferably, the multiple previous records each include a filesystem permission indicator indicative of a filesystem writing permission granted to the process indicated by the identifier; wherein the trained data set is configured to output the expected duration in response to a query including the filesystem permission indicator indicative of a filesystem writing permission granted to the process indicated by the identifier; wherein the recording includes recording the filesystem permission indicator indicative of a filesystem writing permission granted to the process indicated by the identifier; and wherein the query includes the recorded filesystem permission indicator. Thus, a duration of the process can be estimated with increased precision.

A change regarding a filesystem permission indicates that an attacker has successfully completed the exploitation stage and the escalation stage already and is now pursuing the gaining persistence stage. Thus, a quick and resolute response may be needed. Accordingly, it is preferred that the method includes: shutting down the industrial control system when the recorded filesystem permission indicator deviates from the expected filesystem permission indicator.

The duration may preferably be measured from a time or timing during a call to the process until a time or timing during a termination of the process. For example, a recording of a time may be implemented in an routine / function / method for initializing. The duration may preferably be measured from a start until an end of the process. For example, a recording of a time may be implemented at a beginning and an end within a function of the industrial control program. It is preferred to measure / record times both precisely and with a high repetition accuracy, which is why the time measurement may be implemented differently under different operating systems or programming languages.

Optionally, the industrial control program may have, at least during its execution, a parameter stack for storing parameter values and a separate return address stack for storing return addresses. Further, the industrial control program may include: initiating a child process from a parent process, including: a) storing to the return address stack a return address indicative of a memory address of the parent process, and b) storing, if the child process is called with at least one parameter, to the parameter stack all parameter values to be used within the child process. Further, the industrial control program may include: terminating the child process, including: a) deleting, if the child process is called with at least one parameter, from the parameter stack the parameter values of the child process, and b) pulling from the return address stack the return address of the child process indicative of the memory address of the parent process. Further, the industrial control program may include: continuing the execution of the industrial control program at the memory address indicated by the pulled return address. A buffer overflow attack in general could be initiated by supplying an input parameter to the industrial control program that is too long and thus gets partly written into a memory section, where the program execution expects a return address. This structure of the industrial control program separates the input parameters from the return addresses such that a buffer overflow at one parameter would only lead to overwriting another parameter, but not to overwriting a return address. However, a buffer overflow within the parameter data would also lead to multiple wrong parameters, which would likely cause an error handling, which in turn can result in a significant deviation between the expected or predicted duration and the recorded duration.

The "pulled return address" may be the single pulled return address, if there is only one return address stack. However, as will be discussed below, "pulling a return address" may optionally include each of pulling a return address from a mirror return address stack and/or querying a return address from the trained data set. In the latter cases, "the pulled return address" preferably is at least one of the pulled and/or queried return addresses. Further, if there are more than one pulled / queried return addresses, then said continuing at the indicated memory address preferably includes a condition, such as: continuing, if the pulled return address is identical to the pulled copy of the original return address, at the memory address indicated by the return address.

The child process may preferably be terminated at the end of its execution. Further, executing a child process from a parent process may be calling a called function from a calling function. Further, pulling may preferably be reading and then deleting.

According to another option, the industrial control program may have, at least during its execution, a return address stack for storing at least return addresses, and at least one mirror return address stack for mirroring the return address stack. Further, the industrial control program may include: initiating a child process from a parent process, including: a) storing an original return address indicative of a memory address of the parent process to the return address stack, and b) storing a copy of the original return address to the mirror return address stack. Further, the industrial control program may include: terminating the child process, including: a) pulling the return address from the return address stack, and b) pulling the copy of the original return address from the mirror return address stack. Further, the industrial control program may include: comparing the pulled return address with the pulled copy of the original return address. Further, the industrial control program may preferably include: continuing, if the pulled return address is identical to the pulled copy of the original return address, the execution of the industrial control program at the memory address indicated by the pulled return address. Further, the industrial control program may include: detecting, if the pulled return address is not identical to the pulled copy of the original return address, an intrusion into the industrial control system. Storing a copy may be mirroring, or at least it may be included in mirroring. These steps may be repeated for each mirror return address stack. This option has the advantage that an attacker needs to invest computation time on the industrial control device in order to either identify the return address stack and/or to write the attack into every stack of the return address stack and the mirror stack(s), which has a high likelihood of affecting at least one recorded duration, such that the method detects a difference between the recorded duration and the expected duration. It is preferred to have at least two mirror stacks, and more preferred to have at least five mirror stacks.

Optionally, the recording might include: recording the return address, which corresponds to the parent process; wherein the trained data set is trained based on multiple previous records including the identifier, the respective duration and the return address, wherein the trained data set is configured to provide an expected duration and an expected return address for each identifier; wherein the receiving includes: receiving from the data set the expected return address for the recorded identifier; and wherein the detecting the intrusion is further based on a comparison of the recorded return address with the expected return address. That is, it is suggested to use the trained data set for validating the return address. An attacker would have to manipulate the trained data set in addition to all other measures in order to not get detected. Training a data set is a difficult and thus computation time consuming task. Thus, again, an attack has a high likelihood of affecting at least one recorded duration, such that the method detects a difference between the recorded duration and the expected duration. Alternatively, another trained data set may be trained and provided for this option, such that there are one trained duration data set and one trained return address data set.

Further, the recording may include: recording the return address, which corresponds to the parent process; wherein the trained data set is trained based on multiple previous records including at least the identifier, the respective duration, and the respective return address; wherein the trained data set is configured to provide an expected duration and an expected return address for each identifier; wherein the receiving includes: receiving from the data set the expected return address for the recorded identifier; and wherein, if the return address pulled from the return address stack is not identical to the copy of the return address received from the trained data set, the execution of the industrial device program continues at the memory address indicated by the expected return address. Alternatively, another trained data set may be trained and provided for this option, such that there are one trained duration data set and one trained return address data set. As in the above option, it is very unlikely that an attacker modifies a trained data set without detection. Further, even if an attacker manages to overwrite the memory storing the return address, the memory representing the expected return address is unlikely identifiable and overwritable, which is why this option not only adds another layer of protection, but it additionally implements a fail-safe strategy.

For example, the method may determine that the return addresses are not identical, if the memory address indicated by one return address deviates from the memory address indicated by the other return address.

According to another preferred option, the industrial control program may have, at least during its execution, at least one dummy return address stack, each of which being configured for storing a copy of the return address stack, wherein the initiating the child process preferably includes: storing a dummy return address into each dummy return address stack when storing the original return address to the return address stack. This option has the effect, that an attacker needs to invest computation time to identify the return address stack, such that the method detects a deviation between the recorded duration and the expected duration.

Optionally, the industrial control device may be configured to execute an operating system that is configured for said cycle-based execution of the industrial control program; wherein the method steps of said recording, said querying, said receiving, and said detecting are performed for each process of the operating system and the industrial control program; and wherein the multiple records, based on which the trained data set is trained based, include records of each process of the operating system and the industrial control program. According to this preferred option, not only the industrial control program but all programs on the industrial control device are supervised by the suggested method. Thus, also an intrusion into another program, such as an operating system of the industrial control program, is detectable.

Further, the method may include: providing a list of safe mode processes, that is reduced compared to the processes that are recorded; and performing only processes from the list of safe mode processes if an intrusion is detected. This option is suitable for environments, where shutting down the industrial control device is not a preferred solution. For example, thermic processes often need some kind of a controlled cool down procedure.

According to another option, the industrial control device is configured to communicate with at least one other device via a network interface; wherein the method includes: issuing, if an intrusion is detected, a warning via the network interface, which warning is indicative of an intrusion to the industrial control system. This option is useful in use cases, where multiple sections of an industrial environment are controlled by separate industrial control devices. In addition, this option is useful in use cases, where at least one programmable and/or network communication enabled sensor, driver, and/or actuator is in communication, sometimes also referred to as smart control device, with this industrial control device.

The method may include: performing, upon receiving the warning, an intrusion test and/or a self-test at a device, which is connected via the network to said industrial control device. As connected devices are forced to perform a test, an extend of an intrusion can soon be detected.

It is to be mentioned here, that according to one aspect of the invention, a further method for detecting an intrusion into an industrial control system including an industrial control program and an industrial control device is suggested, too. This method has: listening, via a network interface, for a warning; and performing, upon receiving the warning via the network from another industrial control device, an intrusion test and/or a self-test. According to this method, a remedy can be accelerated in the case of an intrusion is detected on a connected device. This effect can also be achieved by an industrial control device having: a network interface configured to be connected via a network to at least one other industrial control device; a listening means, that is configured to listen, via the network interface, for a warning; and a performing means, that is configured to perform, upon receiving the warning via the network from another industrial control device, an intrusion test and/or a self-test.

Returning to the previous method for detecting an intrusion into an industrial control system, this method may optionally include: determining a probability of an intrusion into the industrial control system based on comparing the recorded duration with the expected duration; and issuing an intrusion warning to a supervisor if the determined probability indicates a low intrusion probability. Alternatively or additionally, the method may include: determining a probability of an intrusion into the industrial control system based on comparing the recorded duration with the expected duration; and restricting a functionality to a pre-set reduced set of functionalities if the determined probability indicates a medium intrusion probability. Alternatively or additionally, the method may include: determining a probability of an intrusion into the industrial control system based on comparing the recorded duration with the expected duration; and shutting down the industrial control system if the determined probability indicates a high intrusion probability.

The method for detecting an intrusion may have: recording all data communication of the industrial control device, if an intrusion is detected. This option leads to a data record, that can be used to identify and point out the attacker.

The method for detection an intrusion may have: recording time measurements and program position information, for example to a log file, if an intrusion is detected. This option also leads to a record, that can be used to identify what function got exploited. Said return addresses are one example of program position information. An index indicative of a line of code and/or a block of code is another example of program position information.

In fewer words, suggested is a method for detecting an intrusion into an industrial control system including an industrial control program and an industrial control device, which is configured for a cycle-based execution of the industrial control program, wherein the method includes: providing a trained data set, which is trained based on multiple previous records including an identifier indicative of a respective process and a duration of the process, wherein the data set is configured to output an expected duration in response to a query including the identifier; performing for each process in each cycle: recording an identifier; recording a duration of the execution of the process; querying the recorded identifier to the data set; receiving from the data set an expected duration; and detecting an intrusion based on comparing the recorded duration with the expected duration.

According to another aspect of the invention, a computer program product is suggested. The computer program product comprises instructions which, when the program is executed by a computer, cause the computer to carry out the above method for detecting an intrusion into an industrial control system.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to another aspect of the invention, an industrial control device for detecting an intrusion into an industrial control system, that includes an industrial control program and this industrial control device, is suggested. It is configured for a cycle-based execution of the industrial control program. Further, the industrial control device has a means for providing a trained data set, which is trained based on multiple previous records , each record including an identifier indicative of a respective process of the industrial control program and a duration of the process indicated by the identifier, wherein the data set is configured to output an expected duration of a process in response to a query including the respective identifier. The industrial control device further has a means for performing for each recorded process of the industrial control program in each cycle of the execution of the industrial control program: a) recording an identifier indicative of the process; b) recording a duration of the execution of the process; c) querying the recorded identifier to the data set; d) receiving from the data set an expected duration for the recorded identifier; and e) detecting an intrusion into the industrial control system based on comparing the recorded duration with the expected duration. Said industrial control device has the features and advantages of the suggested method. Presented options and additional features are compatible with the device for achieving additional effects and/or advantages.

A further aspect of this invention relates to a method for operating a set of at least two industrial control devices, which are connected to each other via a network, wherein a first industrial control device is configured for a cycle-based execution of an industrial control program; wherein the method includes: performing by the first industrial control device the above-described method for detecting an intrusion into an industrial control system having the option of issuing a warning if an intrusion is detected; and performing by at least one further industrial control device a protective measure upon receiving from the first industrial control device the warning indicative of an intrusion into the first industrial control device. This method has the effect that an intrusion into the first industrial control device is hindered to spread to the second industrial control device(s).

One example for a protective measure is performing the above-explained method for detecting an intrusion into an industrial control system. This is advantageous as this method has already proven to successfully detect an intrusion.

One further example for a protective measure is performing a self-test, such as testing whether the software on the industrial control device satisfies authenticity requirements.

One further example for a protective measure is: providing a list of safe mode processes that is reduced compared to a number of processes performed and/or run by default, and performing only processes from the list of safe mode processes. This option is beneficial to guarantee safety of a controlled device.

One other example for a protective measure is declining further communication from the first industrial control device. This option may prevent an intrusion into the second industrial control device via the first industrial control device.

According to another aspect of the invention, a computer program product is suggested. The computer program product comprises instructions which, when the program is executed by a computer, cause the computer to carry out the above method for operating a set of at least two industrial control devices.

Another aspect of this invention is a set of at least two industrial control devices, which are connected to each other via a network. The set has at least one first industrial control device and at least one second industrial control device. A first industrial control device is configured for a cycle-based execution of an industrial control, and it has: a means for providing a trained data set, which is trained based on multiple previous records, each record including an identifier indicative of a respective process of the industrial control program and a duration of the process indicated by the identifier, wherein the data set is configured to output an expected duration of a process in response to a query including the respective identifier; a means for performing for each recorded process of the industrial control program in each cycle of the execution of the industrial control program: a) recording an identifier indicative of the process; b) recording a duration of the execution of the process; c) querying the recorded identifier to the data set; d) receiving from the data set an expected duration for the recorded identifier; and e) detecting an intrusion into the industrial control system based on comparing the recorded duration with the expected duration; a network interface configured for communicating with at least one other device; and a means for issuing, if an intrusion is detected, a warning via the network interface indicative of an intrusion into an industrial control system, which has this industrial control device and the industrial control program. A second industrial control device has a network interface configured for communicating with at least one other device; and a means for performing a protective measure upon receiving the warning indicative of an intrusion into the first industrial control device. Of course, there may be at least one industrial control device having all features of a first industrial control device, as well as all features of a second industrial control device, which acts either as the first industrial control device or as the second industrial control device.

Another aspect of this invention relates to a method for training a data set for detecting an intrusion into an industrial control system including an industrial control program and an industrial control device, which is configured for a cycle-based execution of the industrial control program. This suggested method the method includes: recording for each process of the industrial control program in each cycle during an execution of the industrial control program: a) an identifier of the process, and b) a duration of the execution of the process. Further, this suggested method includes: training a data set by supplying multiple records, each record including the identifier and the respective duration, wherein the data set is configured to output an expected duration of a process in response to a query including the respective identifier, wherein a minimal difference between the recorded duration and the expected duration is used as a training object. This method has the advantage of training the data set for the specific industrial control device. Thus the data set is less susceptible for small hardware-related, connection-related, and/or peripheral device-related variations. In the result, a precise prediction of the expected duration can be achieved, thus improving a detection precision.

Preferably, the data set may be configured for use within a method for detecting an intrusion into an industrial control system.

Optionally, the recording may be performed during the execution of the industrial control program in an environment controlled by the industrial control program. This is advantageous, as training in a real environment leads to much more precise expected duration than training in a mock-up.

According to another aspect, a computer program product comprising instructions which, when the program is executed by a computer, cause the computer to carry out the method for training a data set is suggested.

According to still another aspect of the invention, an industrial control device for training a data set for detecting an intrusion into an industrial control system including an industrial control program and an industrial control device is suggested. It is configured for a cycle-based execution of the industrial control program. Further, the industrial control device has a means for recording for each process of the industrial control program in each cycle during the execution of the industrial control program: a) an identifier of the process, and b) a duration of the execution of the process. The industrial control device further has a means for training a data set by supplying multiple records, each record including the identifier and the respective duration, wherein the data set is configured to output an expected duration of a process in response to a query including the respective identifier, wherein a minimal difference between the recorded duration and the expected duration is used as a training object. This method has the advantage of training the data set for the specific industrial control device. Thus the data set is less susceptible for small hardware-related, connection-related, and/or peripheral device-related variations. In the result, a more precise prediction of the expected duration can be achieved, thus improving a detection precision. Said industrial control device has the features and advantages of the suggested method. Presented options and additional features are compatible with the device for achieving additional effects and/or advantages.

It is another aspect of this invention, that a trained data set is suggested, which is configured and/or adapted for detecting an intrusion into an industrial control system including an industrial control program and an industrial control device, which is configured for a cycle-based execution of an industrial control program. Training data for the data set is recorded for each process of the industrial control program in each cycle during an execution of the industrial control program including: an identifier of the process, and a duration of the execution of the process. Further, the data set is configured to output an expected duration of a process in response to a query including the respective identifier. Further, a minimal difference between the recorded duration and the expected duration is used as a training object. This trained data set can advantageously be used in the above precise method for intrusion detection.

According to still another aspect of the invention, a method for operating an industrial control system including an industrial control program and an industrial control device, which is configured for a cycle-based execution of an industrial control program, is suggested. The suggested method includes: performing the above presented method for training a data set for detecting an intrusion into an industrial control system. The suggested method further includes: terminating the method for training the data set, if a comparison between the recorded duration and the expected duration fulfills a pre-set object criterion for each recorded duration during at least one execution of the industrial control program. This suggested method further includes: performing the above presented method for detecting an intrusion into the industrial control system. The method according to this option is advantageous for example in a use case where a user might want to update the industrial control program and/or to exchange and/or repair parts of the industrial control device and/or even parts connected to the industrial control device. Thus, after a change within the industrial control system, a user can train the data set under the updated setup, before the suggested method switches into the detection phase.

According to another aspect of this invention, a computer program product comprising instructions which, when the program is executed by a computer, cause the computer to carry out the method is suggested. The computer program product can realize the method and has its advantages.

According to even another aspect of the invention, an industrial control device is suggested. It is configured for a cycle-based execution of the industrial control program. This industrial control device has all means of the above industrial control device for training a data set. This industrial control device further has a means for terminating the method for training the data set, if a comparison between the recorded duration and the expected duration fulfills a pre-set object criterion for each recorded duration during at least one execution of the industrial control program. Further, this industrial control device has all means of the above industrial control device for detecting an intrusion into an industrial control system. This industrial control device has the advantages of the above methods, especially it provides an increased intrusion detection precision.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: schematically shows a flow diagram of a method for operating an industrial control system according to one illustrative embodiment of the invention;
- Fig. 2: schematically shows a flow diagram of a method for detecting an intrusion into an industrial control system according to the illustrative embodiment of the invention;
- Fig. 3: schematically shows a flow within a cycle of an industrial control program according to the illustrative embodiment of the invention;
- Fig. 4: schematically shows usage of storage partitions during a normal operation of an industrial control system and after a detection of an intrusion into the industrial control system according to the illustrative embodiment of the invention;
- Fig. 5: schematically shows a network behavior after a detection of an intrusion into the industrial control system according to the illustrative embodiment of the invention;
- Fig. 6: schematically shows a memory stack of an industrial control system;
- Fig. 7: schematically shows a memory stack of an industrial control system under attack;
- Fig. 8: schematically shows a separate memory stacks an industrial control system according to an illustrative embodiment of the invention;
- Fig. 9: schematically shows a separate memory stacks an industrial control system according to an illustrative embodiment of the invention; and
- Fig. 10: schematically shows a time line of an execution of an industrial control program according to an illustrative embodiment of the invention under normal operation and after detection of an intrusion.

In the Figures, like reference numerals designate like or functionally equivalent elements, unless otherwise indicated.

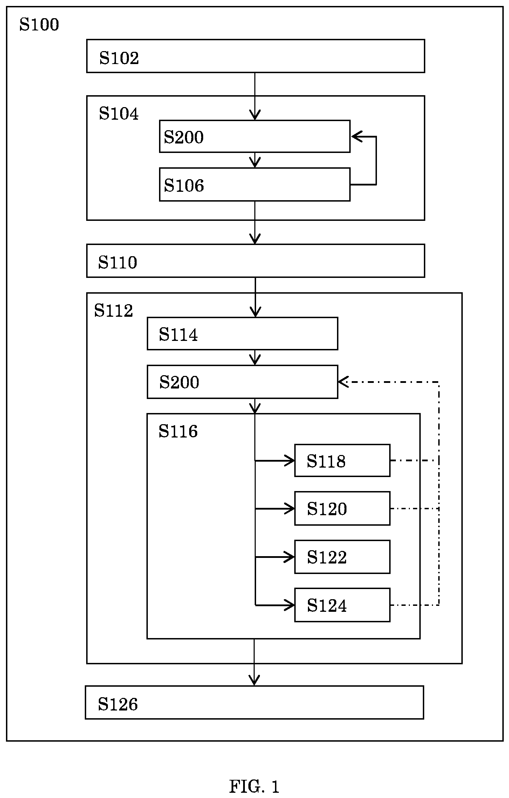

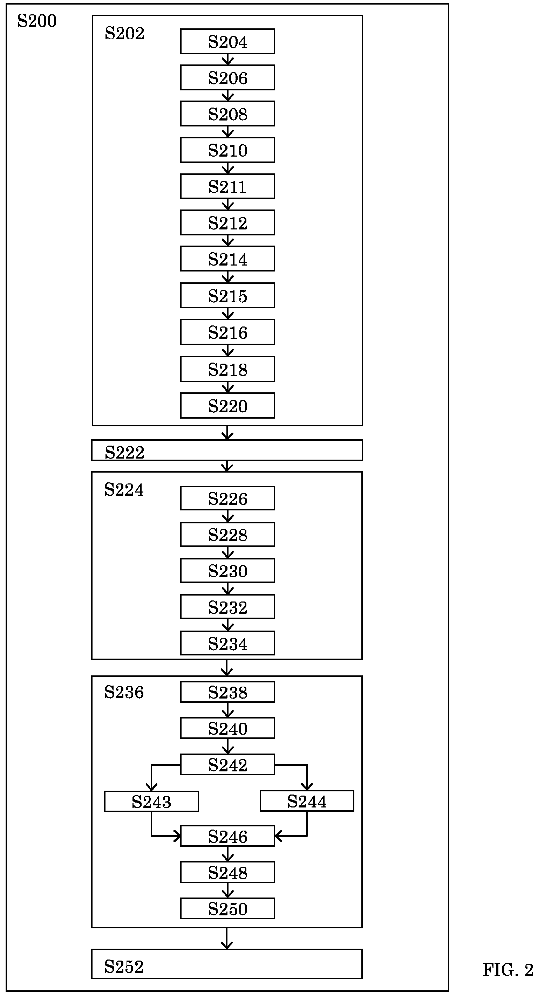

First, a flow of method steps will be described based on Figs. 1 and 2. It is emphasized however, that this embodiment mainly serves illustrative purposes, and thus, there are mandatory and optional features and steps included.

Performing a method 100 for operating an industrial control system is shown as a step S100 in Fig. 1.

An industrial control system has an industrial control device, such as an industrial personal computer device and/or a programmable logic controller device, and an industrial control program. The industrial control device is configured for cycle-based execution of the industrial control program. The term "program" denotes any software or software suit, that is able to be run by an industrial control device for industrial control purposes. The term "program" includes the case where more than one distinct programs cooperate.

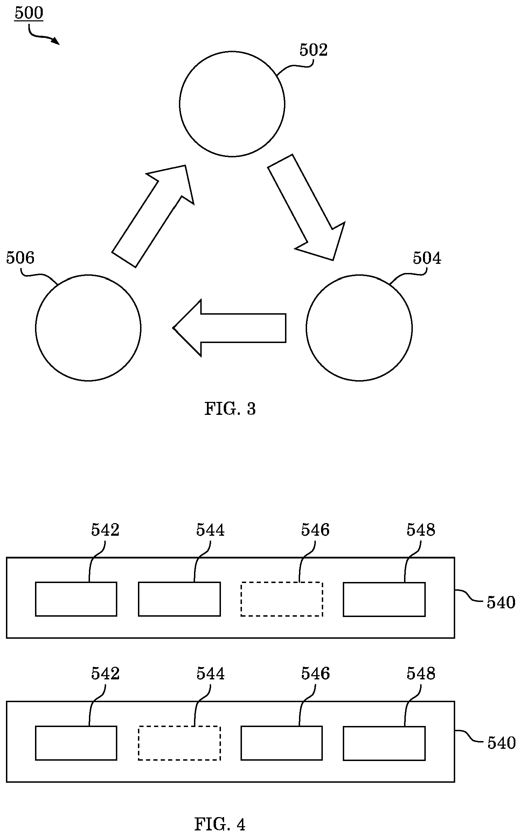

Fig. 3 is a diagram, which illustrates an exemplary cycle-based execution of an industrial control program. One cycle 500 may comprise a network communications phase 502, wherein which data may be sent via a network to another device and/or be received from another device via the network. Next may be a data processing phase 504, wherein received data and/or stored data is processed. Next may be a user control program phase 506. This phase preferably comprises a more or less complex decision making based at least partly on data processed in the previous phase. Next may be the network communications phase 502 of the following execution cycle.

It is to be mentioned, that the listing of steps below and/or in the figures merely illustrates one preferred sequence. However, it is possible for most of these steps to be executed in a different order.

The method 100 may begin with a step S102 of initializing the industrial control program.

Then, in a step S104, a method 200 for training a data set for detecting an intrusion into an industrial control system is performed. Due to this step, an intrusion detection is adaptable to a software update or the like. It is preferred that this step S104 is performed only after an administrator authorized the training.

The training method 200 may have steps S200 and S106.

In step S200, multiple sub-steps S202 to S252 may be performed for each process of the industrial control program in each cycle 500 of the execution of the industrial control program.

First is a step S202 of initiating a child process from a parent process. A process may be a function, a method, a thread, a sequence of any thereof, and/or a combination thereof. Preferably, a process is a single function.

Step S202 may have sub-steps S204 to S220, for example.

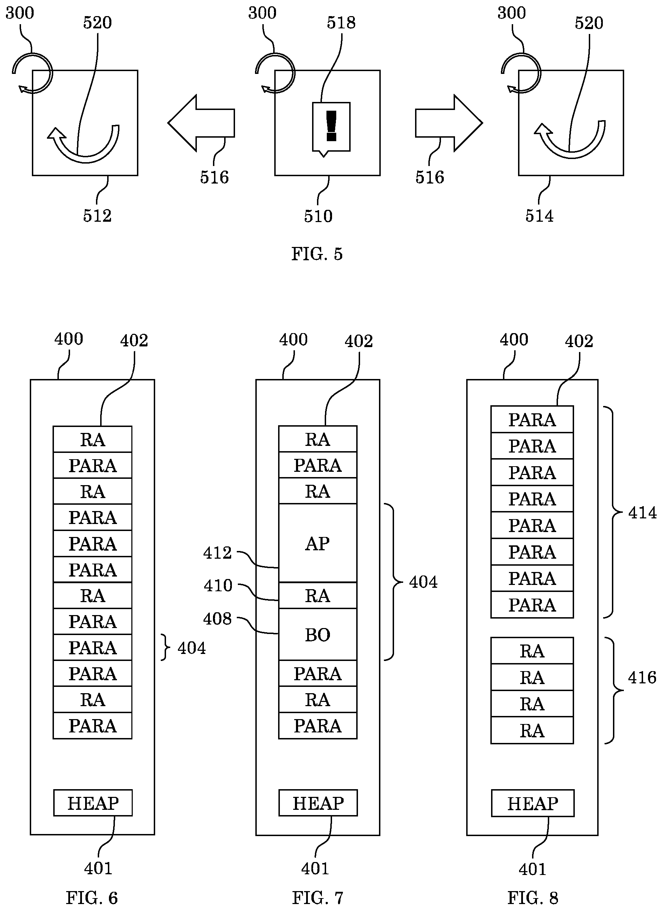

Next, an optional memory concept is explained be reference to Figs. 6 to 9. Fig. 6 shows a usual memory concept, which may be used with the suggested method(s). A random access memory or RAM has an address space 400 reserved for execution of the industrial control program. The address space 400 has a Heap 401 and a single stack 402. For example, high RAM addresses (like #FFFFFFFF) are shown at the top of the rectangles of Figs. 6 to 9, while low addresses (like #00000000) are shown at the bottom of these rectangles. The stack 402 may be a last-in-first-out stack. The stack contains return addresses RA and parameters or parameter values PARA. Whenever a parent process calls a child process, a return address and usually at least one parameter is put onto the stack. The return address indicates a memory position, where the program execution has to return to after termination of the child process. The parameter values provide data to the child process. However, an attacker might attack the industrial control program with a so-called buffer overflow attack. For example, an attacker might supply a fake sensor value, that exceeds a memory space reserved for values from a specific sensor. Fig. 7 illustrates such a scenario, where an attacker wrote a long data 404 while only a shorter parameter 406 was expected. This long data 404 contains some buffer overflow data 408, a modified return address 410 and an attack program 412. The attack program 412 starts at a memory address indicated by the modified return address 410. Thus, am attacker could force execution of the attack program 412.

Another memory concept to prevent or at least hinder this attack type is illustrated in Fig. 8. The address space 400 has two separate stacks, which are a parameter stack 414 and a return address stack 416. Due to this separation, it can be prevented that a buffer overflow attack to a parameter value overwrites a return address.

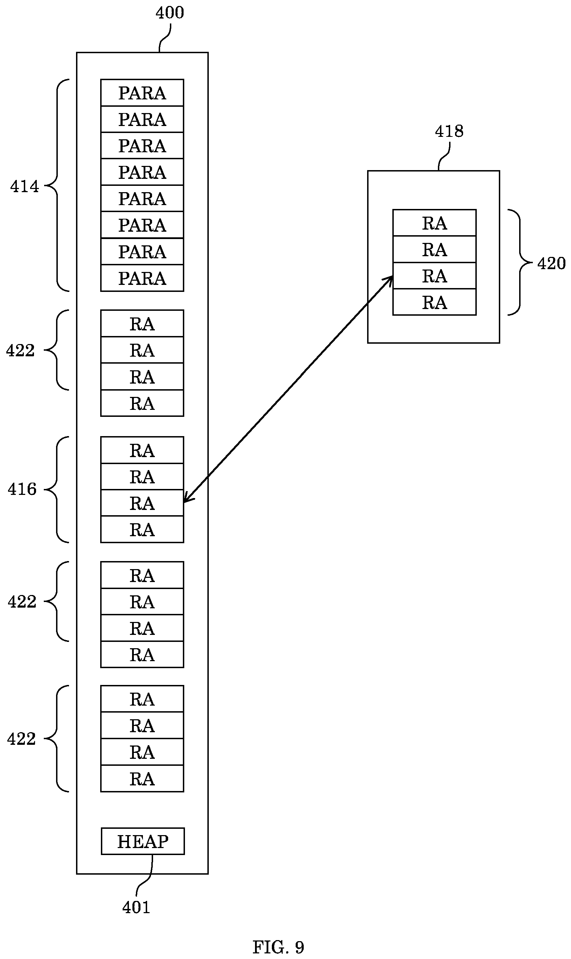

Another memory concept to prevent or at least hinder an attack is illustrated in Fig. 9. The RAM has the main address space 400 and a separate security address space 418. In the address space 400 are stored the single stack 402 or the split stacks 414, 416, for example. In the security address space 418 is stored a mirror stack 420, which is a copy of the single stack 402 or, preferably, of the return address stack 416. In other words, the mirror stack 420 is a copy of that stack 402, 416, which holds the return addresses in the main address space 400. Further, an associated RAM copy at each time of adding a copy of a return address RA to the mirror return address stack 420 may be added into the security address apace 418.

Another memory concept to prevent or at least hinder an attack is illustrated in Fig. 9, too. The main address space 400 has the split stacks 414, 416 plus additional dummy stacks 422.

The mirror stack concept and the dummy stack concept have both the effect that an attacker needs to invest computation time on the industrial control device in order to overcome the respective concept. Thus, it takes considerably longer to execute an vulnerable / attacked process of the industrial control program 500.

Returning to Figs. 1 and 2, during the initiating or calling the child process, parameter values PARA may be handed over to the child process. In a step S204, these parameter values PARA are stored in a parameter stack 414, for example

During the initiating or calling the child process, a return address RA indicative of a memory address of the parent process is stored to a return address stack 416 in a step S206.

Further, in a step 208, the return address is stored to a mirror stack 420.

Next, in a step S210, the return address is additionally stored to each of at least one dummy stacks 422.

Also, the return address RA is recorded in a step S211. Thus, the return address RA can be used for more precise prediction of the expected duration, that is, it can be used for rendering the expected duration more precisely. Thus, a resulting method can gain precision in detecting an intrusion. Further, the recorded return address is comparable to an expected return address as a validity check or the like.

Next, a process start time of the process is recorded in a step S212. This step forms part of recording a duration of this process. The timing of the industrial control program usually has a very consistent process duration or "heartbeat", as a production line usually performs the same tasks over and over again with great regularity.

In a next step S214, an identifier indicative of this process is recorded. The identifier is preferably not indicative of this execution of the process. The identifier may be a unique function name or the like, for example.

In a next step S215, any input data to the child process, which comprises at least the parameter values PARA, is recorded.

Then, in a step S216, a parent indicator is recorded, which is indicative of the parent process, which initiated this (child) process.

In a next step S218, an execution permission indicator is recorded. The execution permission indicator is indicative of a user owning this child process and/or an execution permission granted to this child process indicated by the identifier. The user in this case is preferably not an indicator of a person, but a role assigned within the operating system of the industrial control device.

Further, in a step S220, a filesystem permission indicator is recorded, which is indicative of a filesystem writing permission granted to the process indicated by the identifier.

Steps S218, S220 both serve in detecting whether a privilege escalation is being performed by an attacker. It is not necessary but beneficial and thus preferred, if the methods 100, 200, and 300 are applied to all (other) processes and all (other) software being executed on the industrial control device, and not just the industrial control program. Further, implementing said step S220 is valuable in detecting if an attacker is in the gaining persistence phase of an attack.

Then, in a step S222, this child process is performed. After this child process is completed and/or interrupted, the child process is terminated in a step S224. Said terminating of the child process in step S224 may have sub-steps 226 to 234.

In a step S226, an interrupt indicator may be recorded. Some industrial control systems have interrupt signals, wherein processes are configured to be immediately terminated, to be cancelled for this cycle, and/or to be terminated or cancelled as fast as safely possible, upon receiving said interrupt signal. For example, a safety shut-off process may be implemented via an interrupt logic. Thus, the interrupt indicator is indicative of whether the process indicated by the identifier is terminated normally or terminated due to an interrupt signal.

In a next step S228, an end time of the child process is measured. Then, a difference between this end time and the start time recorded in S212 is determined. This difference is the duration of the child process. That is, step S228 is a step of measuring an end time of this process indicated by the identifier and recording a duration of this process indicated by the identifier.

If the child process performed in S222 itself also is a parent process to another child process (a grandchild process, so to speak) then the duration of this grandchild process preferably is included in the duration of the child process performed in S222. That is, a deviation the duration of this grandchild process would be reflected in both: first, in a comparison of the duration of the grandchild process with an expected duration regarding the grandchild process, and second, in a comparison of the duration of this child process with an expected duration regarding this child process. As an alternative, in order to independently assess a duration of every single process, a duration of this child process may be calculated in this step S228 as sum of a difference between the time measured in the grandchild processes step S212 and the time measured in this child processes step S212, and of a difference between the time measured in this child processes step S228 and a time measured in the grandchild processes step S228. These are merely two preferred options. Other options include parallel processing on difference processors or processor cores, sequential processing of processes, and much more.

In other implementations, the start time and the end time of this process might be measured independently, so that step S228 may be only a step recording a duration of this process indicated by the identifier.

Then in a next step S230, the parameter values PARA of the child process are deleted from the parameter stack 414. If the single stack 402 is implemented, then the parameter values PARA of the child process are deleted from the single stack 402 or the parameter stack 414. If the child process should have been initialized without storing parameter values PARA to the parameter stack 414 / single stack 402 in S204, then this step S230 may be skipped.

In a next step S232, the return address RA indicative of the memory address of the parent process is pulled from the return address stack 416 or the single stack 402. Then, in a step S234, the return address RA indicative of the memory address of the parent process is pulled from the mirror return address stack 420. When a return address RA is pulled from a stack 402, 416, 420, it preferably is read from the stack 402, 416, 420 and then deleted from this stack 402, 416, 420.

After the termination of the child process in steps S224 to S234, an intrusion detection is performed in S236 comprising sub-steps S238 to S250.

First, in steps S238 to S244, an intrusion detection based on the duration of the child process is performed.

In a step S238, a data set is queried with at least the identifier recorded in S214. Preferably, the query additionally includes and/or refers to at least one of the input data recorded in S215, the parent indicator recorded in S216, the interrupt indicator recorded in S226, the execution permission indicator recorded in S218, and/or the filesystem permission indicator recorded in S220. The query may also include the return address RA recoded in S211, preferably except for the case where the same trained data set is to output the expected duration and an expected return address.

The data set preferably is a machine learning data model. A query to the data set is preferably a formulated request to the data set.

The steps S200 to S252 are preferably performed during a training of the data set in step S104 as well as during an intrusion detection later in step S112. However, an output quality - that is mainly the precision of the expected duration for the respective process - is very poor at the beginning and increases with an increasing number of training records.

Next, in a step S240, the expected duration for the process indicated by the identifier is received from and/or outputted by the data set.

In a next step S242, the duration of this child process recorded in A228 is compared to the expected duration for this child process received in S240.

The performed sequence of steps S202 to S252 differs between the training within the training method 200 and the later detection method 300. In the training method 200, a fit between the recorded duration of this child process and the expected duration for this child process is determined and fed back to the data set as a training feedback. That is, a minimization difference between the recorded duration and the expected duration is used as an training object function for training the data set in step S243. in other words, method 200 performs an analysis to determine how the industrial control system behaves under normal circumstances.

However, in another preferred embodiment, the data set may be continuously trained. In this case, the step S243 is performed also during the detecting method 300.

Next, in a step S244, an intrusion is detected based on the difference between recorded duration of this child process and the expected duration for this child process. That is, preferably, if the difference exceeds a threshold value, it is determined that the industrial control device is being intruded.

In a next step S246, the return address RA pulled from the return address stack 402 or preferably 416 in S232 is compared to the return address RA pulled from the mirror return address stack 420 in S234.

In a next step S248, the data set is queried for an expected return address. The query preferably includes the identifier recorded in S214 as well as preferably at least one of the input data recorded in S215, the parent indicator recorded in S216, the interrupt indicator recorded in S226, the execution permission indicator recorded in S218, and/or the filesystem permission indicator recorded in S220. An expected return address is received from and/or outputted by the data set. Then, in said step S248, the expected return address is compared to the return address RA pulled from the return address stack 402 or preferably 416 in S232 and/or to the return address pulled from the mirror return address stack 420 in S234.

In a next step S250, an intrusion into the industrial control system is detected, if the return addresses differ from each other. Of course, this preferably does not include a difference between any pulled return address and the expected return address during the training method 200.

Then, in a next step S252, the execution of the industrial control program is continued, if no intrusion into the industrial control system is detected in steps S2244, S250. However, as will be discussed below, there are options where the execution is continued after a positive intrusion detection in a modified manner.

Returning to Fig. 1, the method continues with a step S106 of storing the trained data set. Afterwards, the method usually returns to the step S200 of performing the sequence of steps S202 to S252 described above.

However, if a comparison between the recorded duration and the expected duration fulfills a pre-set object criterion for each recorded duration during at least one execution of the industrial control program, then the method 200 is terminated in step S110. The pre-set object criterion preferably is a maximum deviation. However, it shall be noted that the pre-set criterion may comprise a set of pre-et criterions, such as a maximum deviation per process in milliseconds, a maximum deviation per process in percent of the recorded and/or expected duration, a maximum sum of all deviations per program execution in milliseconds, a maximum sum of all deviations per program execution in percent of the duration of the whole program execution, and many more.

That is, the method 200 results in a trained data set that is configured for detecting an intrusion into an industrial control system including an industrial control program and an industrial control device, which is configured for a cycle-based execution of an industrial control program. Training data for the data set is recorded for each process of the industrial control program in each cycle during an execution of the industrial control program in steps S200, S212, S214, S215, S216, S218, S220, S226, and S228. The trained data set is configured to provide an expected duration for each identifier. Said minimizing of the difference between the recorded duration and the expected duration is used as a training object of the training in S243.

Next is a step S112. In step S112, the method 300 for detecting an intrusion into an industrial control system is performed.

The method 300 has a first step S114, wherein said trained data set is provided.

Then, the method 300 has step S200, too. Some optional differences between the execution of step S200 during the training method 200 and this detection method 300 are explained above.

In steps S212 ad S228, timestamps may be taken, and a duration in between the taken timestamps may be calculated in S228. As every process has a characteristic duration, this duration or these durations correspond to a "heartbeat" of the industrial control system. The duration(s) will vary in an acceptable range, however the change probably exceeds a predetermined level, e.g. due to the following causes: 1) the industrial control device is started/stopped, 2) a different user program is uploaded, and/or 3) a hacker breaks normal control flow by exploiting a vulnerability.

Thus, in step S200, the method 300 can detect an intrusion based on the difference between the respective recorded duration and the respective expected duration. Further, in step S200, the method 300 can optionally detect an intrusion based on the difference between the return addresses RA pulled from the return address stack 402 or 426, the return address RA pulled from the mirror return address stack 420 and/or the return address outputted from the trained data set in step S248. In other words, an intrusion can independently be detected in each of steps S244 and S250 for each process.

If an intrusion is detected, then the method 200 may execute mitigating the detected intrusion in a step S116, which may include at least one of steps S118 to S124. It is noted that it rarely may be beneficial to not react to a detected intrusion, for example if a "honey pot" industrial control device is employed.

In step S118, a warning is issued by the industrial control device via a network. The warning is indicative of an intrusion to the industrial control system. This is schematically illustrated in Fig. 5. There are three industrial control devices 510, 512, and 514. Each industrial control device 510 executes the method 300 for detecting an intrusion. In this example, the industrial control device 510 detects an intrusion. Then, the industrial control device 510 issues a warning 518, which is then forwarded via a network interface 516 and a network to the other industrial control devices 512, 514. Upon receiving the warning 518, the other industrial control devices 512, 514 perform precautionary measures 520. Said precautionary measures may include: not accepting any more data from the intruded industrial control device 510, performing an intense self-test, reducing a control program to performing only safety-critical processes, forwarding the warning 518, and/or the like.

A pre-set list of safe mode processes is provided, for example by an administrator or programmer before the industrial control program is started. The list of safe mode processes shorter than a list of all processes, which are recorded in step S200 during normal operation. The list of safe mode processes is preferably compiled to ensure are safe operation of a system, which is controlled by the industrial control system. For example, if the industrial control system is used for controlling a potentially hazardous production plant, then the safe-mode processes may be compiled to shut-down the production plant without any hazard. In step S120, the control switches to performing only processes from the list of safe mode processes.

Alternatively or additionally, the list of safe mode processes can be compiled to prevent the spread of the attack. That is, the list of safe mode processes can be complied to limit communication. For example, the listed processes may be selected to allow only essential communication. Thus, potentially dangerous communication can be blocked. For example, most communication ports can be closed in an attempt to stop further infection of devices.

In some situations, the fastest way of terminating an attack is stopping the attacked industrial control device. For example, the data set can be configured to output an expected execution permission indicator and/or an expected filesystem permission indicator. If the recorded permission indicator differs from the expected permission indicator, it is safe to assume that the attacker gained persistence on the attacked system. For example in this case, an immediately shutting down the infected system may be allotted. Therefore, step 122 is provided. If step 122 is executed, shutting down the industrial control system is performed.

Another mitigation to a detected intrusion will be presented in accordance with Fig. 4. Fig. 4 schematically shows a memory 540 of a storage unit, such as a hard drive. In the memory 540 are stored a boot partition 542, a default system partition 544, a backup system partition 546, and a user data partition 548, for example. Both system partitions hold a copy of: an operating system and the industrial control program. The upper diagram shows a usage of these partitions under normal operation. The boot partition 542, the default system partition 544, and the user data partition 548 are used in this case. Upon detection of an intrusion, step S122 is performed. The Step S124 has rebooting the industrial control system and switching to a previously unused copy of the industrial control program.

Finally, at a step S126, the execution is terminated, for example after a control ends.

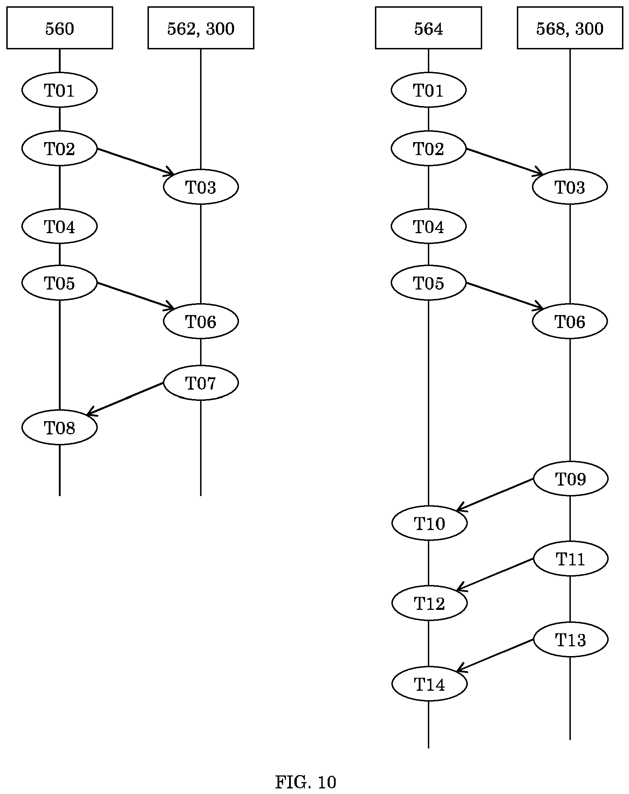

An exemplary use of the mirror stack is explained below in more detail and with reference to Fig. 10. The left part of the diagram shows a flow 560 of the industrial control program and a related flow 562 of a security program having the method 300 under normal operation. At a time T01, the execution of the industrial control program enters a process, such as a function. At a time T02, a return address of a parent process is recorded to the return address stack 416. At a time T03, the return address is recorded on the mirror stack 420, and preferably a RAM snapshot of the industrial control program is created. At a time T04, the step S222 is performed, that is, the industrial control program or at least a process thereof runs. At a time T05, the execution of the industrial control program requests to return the memory address indicated by the return address RA recorded in the return address stack 416. At a time T06, it is checked in step S246, whether the return address RA from the return address stack S416 matches the return address RA from the mirror return address stack 420. At a time T07, the return addresses match, and then, at a time T08, the execution of the industrial control program continues.

The right part of the diagram in Fig. 10 shows a flow 564 of the industrial control program and a related flow 566 of a security program having the method 300, but under an intrusion detection operation. The events at time T01 to T06 are the same as under the normal operation. At a time T09 however, the security program initiates mitigation measures in step S116, as the return addresses RA from the return address stack 416 and the mirror return address stack 420 do not match. At a time T10, the execution of the industrial control program is interrupted. At a time T11 the latest RAM backup, recorded at time T03, is read. At a time T12, the RAM backup is written to the RAM. At a time T13, continuing the execution is initiated / allowed. At a time T14, the execution of the industrial control program is continued.

Finally, it shall be noted that control processes of the industrial control program are performed in step S222 within the training method 22 as well as within the detection method 300. Thus, a control object is controllable by the industrial control system with the added benefit of a precise intrusion detection.

Although the present invention has been described in accordance with preferred embodiments, it is obvious for the person skilled in the art that modifications are possible in all embodiments.

### Used reference signs:

- 100: method for operating an industrial control system
- 200: method for training a data set for detecting an intrusion into an industrial control system
- 300: method for detecting an intrusion into an industrial control system
- 400: address space of RAM
- 401: Heap
- 402: single stack
- 404: long data
- 406: short parameter
- 408: buffer overflow data
- 410: modified return address
- 412: attack program
- 414: parameter stack
- 416: return address stack
- 418: security address space
- 420: mirror stack
- 422: dummy stack
- 500: cycle of an industrial control program
- 502: network communications phase
- 504: data processing phase
- 506: user control program phase
- 510: industrial control device
- 512: industrial control device
- 514: industrial control device
- 516: network interface
- 518: warning
- 520: precautionary measure
- 540: memory
- 542: boot partition
- 544: default system partition
- 546: backup system partition
- 548: user data partition
- 560: flow of an industrial control program
- 562: flow of a security program having an intrusion detection method
- PARA: parameter value
- RA: return address
- S100: performing a method for operating an industrial control system
- S102: initializing an industrial control program
- S104: performing a method for training a data set
- S106: storing a data set after training
- S110: terminating a method for training the data set
- S112: performing a method for detecting an intrusion into an industrial control system
- S114: providing a trained data set
- S116: mitigating a detected intrusion
- S118: issuing a warning via a network interface
- S120: performing only processes from a list of safe mode processes
- S122: shutting down an industrial control system
- S124: rebooting an industrial control system and switching to a previously unused copy of an industrial control program
- S126: terminating the execution
- S200: performing multiple steps for each process in each cycle of an execution of an industrial control program
- S202: initiating a child process from a parent process
- S204: storing parameter values to a parameter stack
- S206: storing a return address indicative of a parent process to a return address stack
- S208: storing a return address indicative of a parent process to a mirror stack
- S210: storing a return address indicative of a parent process to at least one dummy stack
- S211: recording a return address indicative of a parent process
- S212: recording a process start time
- S214: recording an identifier of the process
- S215: recording input data to the process indicated by the identifier
- S216: recording a parent indicator
- S218: recording an execution permission indicator indicative of a user and/or an execution permission
- S220: recording a filesystem permission indicator indicative of a filesystem writing permission granted to the process indicated by the identifier
- S222: performing a child process
- S224: terminating a child process
- S226: recording an interrupt indicator indicative of whether the child process is terminated by an interrupt signal
- S228: measuring an end time of this process indicated by the identifier and recording a duration of this process indicated by the identifier
- S230: deleting parameter values of a child process from the parameter stack
- S232: pulling a return address from a return address stack
- S234: pulling a return address from a mirror return address stack
- S236: detecting an intrusion into the industrial control system
- S238: querying at least a recorded identifier to the data set
- S240: receiving from the data set an expected durations
- S242: comparing a recorded duration with an expected duration
- S243: training a data set
- S244: detecting an intrusion into the industrial control system based on a comparison of a recorded duration with an expected duration
- S246: comparing a return address pulled from a return address stack to a return address pulled from a mirror return address stack
- S248: a return address pulled from a return address stack to an expected return address received upon a query from a trained data set
- S250: detecting an intrusion into the industrial control system based on a pulled return address or pulled return addresses
- S252: continuing execution
- T01: time of entering a function
- T02: time of recording a return address to a return address stack
- T03: time of recording a return address to a mirror return address stack and creating a RAM snapshot
- T04: time of performing a process of the industrial control program
- T05: time of requesting returning to return address from return address stack
- T06: time of checking, whether the return addresses from return address stack and mirror return address stack match
- T07: time of matching
- T08: time of continuing the execution of the industrial control program
- T09: time of initiating mitigation
- T10: time of interrupting an execution of an industrial control program
- T11: time of reading RAM backup
- T12: time of writing RAM backup to RAM
- T13: time of initiating execution of industrial control program
- T14: time of continuing execution of industrial control program

## Claims

1. A method (300) for detecting an intrusion into an industrial control system including an industrial control program and an industrial control device (510), which is configured for a cycle-based execution of the industrial control program, wherein the method (300, S112) includes:
providing (S114) a trained data set, which is trained based on multiple previous records, each record including an identifier indicative of a respective process of the industrial control program and a duration of the process indicated by the identifier, wherein the data set is configured to output an expected duration of a process in response to a query including the respective process identifier;
performing (S200) for each process of the industrial control program in each cycle (500) of an execution of the industrial control program:
recording (S214) an identifier indicative of the process;
recording (S212, S228) a duration of the execution of the process;
querying (S238) the recorded identifier to the data set;
receiving (S240) from the data set an expected duration of the process indicated by the recorded identifier; and
detecting (S244) an intrusion into the industrial control system based on comparing (S242) the recorded duration with the expected duration.

2. The method (300) according to claim 1, wherein the multiple previous records, on which training (S243) the trained data set is based, each additionally includes at least one of the following process information:
an input data to the process indicated by the identifier,
a parent indicator indicative of at least a parent process of the process indicated by the identifier,
an interrupt indicator indicative of whether the process indicated by the identifier has been terminated by an interrupt signal,
an execution permission indicator indicative of a user owning the process and/or an execution permission granted to the process indicated by the identifier, and/or
a filesystem permission indicator indicative of a filesystem writing permission granted to the process indicated by the identifier;
wherein the trained data set is configured to output the expected duration in response to a query (S238) including the at least one additional process information;
wherein the recording (S212, S214, S228) includes recording (S215, S216, S218, S219, S226) the at least one additional process information; and
wherein the querying (S238) includes the at least one additional process information.

3. The method (300) according to any preceding claim, wherein the industrial control program has a parameter stack (414) for storing parameter values (PARA) and a separate return address stack (416) for storing return addresses (RA); and
wherein the industrial control program includes:
initiating (S220) a child process from a parent process, including:
storing (S208) a return address indicative of a memory address of the parent process to the return address stack (416), and
storing (S204), if the child process is called with at least one parameter, all parameter values (PARA) to be used within the child process to the parameter stack (414);
terminating (S224) the child process, including:
deleting (S230), if the child process is called with at least one parameter, the parameter values (PARA) of the child process from the parameter stack (414), and
pulling (S323) the return address (RA) of the child process indicative of the memory address of the parent process from the return address stack (416); and
continuing (S252) the execution of the industrial control program at the memory address indicated by the pulled return address.

4. The method (300) according to any preceding claim, wherein the industrial control program has a return address stack (402, 416) for storing at least return address (RA), and a mirror return address stack (420) for mirroring the return address stack (402, 416);
wherein the industrial control program includes:
initiating (S202) a child process from a parent process, including:
storing (S204) an original return address (RA) indicative of a memory address of the parent process to the return address stack (402, 416), and
storing (S208) a copy of the original return address (RA) to the mirror return address stack (420);
terminating (S224) the child process, including:
pulling (S232) the return address (RA) from the return address stack (402, 416); and
pulling (S234) the copy of the original return address (RA) from the mirror return address stack (420);
comparing (S246) the pulled return address (RA) with the pulled copy of the original return address (RA); and
detecting (S250), if the pulled return address (RA) is not identical to the pulled copy of the original return address (RA), an intrusion into the industrial control system.

5. The method (300) according to claim 3 or 4, wherein the industrial control program has at least one dummy return address stack (S422), each configured for storing a copy of the return address stack;
wherein the initiating (S202) the child process includes:
storing (S210) each one copy of the return address (RA) to each dummy return address stack (422).

6. The method (300) according to any preceding claim, wherein the industrial control device is configured to execute an operating system that is configured for said cycle-based execution of the industrial control program;
wherein the method steps of said recording (S212, S214, S228), said querying (S238) , said receiving (S240), and said detecting (S244) are performed (S200) for each process of the operating system and the industrial control program; and
wherein the multiple records, based on which the trained data set is trained based, include records of each process of the operating system and the industrial control program.

7. The method (300) according to any preceding claim, wherein the method (300) includes:
providing a list of safe mode processes, that is reduced compared to the processes that are recorded;
performing (S118) only processes from the list of safe mode processes if an intrusion is detected.

8. The method (300) according to any of the preceding claims, wherein the industrial control device (510) is configured to communicate with at least one other device (512, 514) via a network interface (516), wherein the method (300) includes:
issuing (S116), if an intrusion is detected, a warning (518) via the network interface (516) indicative of an intrusion to the industrial control system (510).

9. A computer program product comprising instructions which, when the program is executed by a computer, cause the computer to carry out the method (300) of one of claims 1 - 8.

10. A method for operating a set of at least two industrial control devices (510, 512, 514), which are connected to each other via a network,
wherein a first industrial control device (510) is configured for a cycle-based execution of an industrial control program; wherein the method includes:
performing by the first industrial control device (510) the method (300) for detecting an intrusion into an industrial control system according to claim 8; and
performing by at least one further industrial control device (512, 514) a protective measure upon receiving from the first industrial control device (510) the warning (518) indicative of an intrusion into the first industrial control device (510).

11. A method (200) for training a data set for detecting an intrusion into an industrial control system including an industrial control program and an industrial control device (510), which is configured for a cycle-based execution of the industrial control program,
wherein the method (200) includes:
recording (S214, S212, S228) for each process of the industrial control program in each cycle (500) during an execution of the industrial control program:
an identifier of the process, and
a duration of the execution of the process; and
training (S243) a data set by supplying multiple records, each record including a process identifier and the respective process duration, wherein the data set is configured to output an expected duration of a process in response to a query including the respective process identifier, wherein a minimal difference between the recorded duration and the expected duration is used as a training object.

12. The method (200) according to claim 11,
wherein the recording (S214, S212, S228) is performed during the execution (S100) of the industrial control program in an environment controlled by the industrial control program.

13. A trained data set for detecting an intrusion into an industrial control system including an industrial control program and an industrial control device, which is configured for a cycle-based execution of the industrial control program,
wherein training data for the data set is recorded for each process of the industrial control program in each cycle (500) during an execution of the industrial control program including:
an identifier of the process, and
a duration of the execution of the process;
wherein the trained data set is obtained by supplying multiple training data records, each record including a process identifier and the respective process duration,
wherein the trained data set is configured to output an expected duration of a process in response to a query including the respective process identifier, and
wherein a minimal difference between the recorded duration and the expected duration is used as a training object.

14. A method (100) for operating an industrial control system including an industrial control program and an industrial control device (510), which is configured for a cycle-based execution of an industrial control program,
wherein the method (100) includes:
performing (S104) the method (200) for training a data set for detecting an intrusion into an industrial control system according to any one of claims 11 to 12;
terminating (S110) the method (200) for training the data set, if a comparison between the recorded duration and the expected duration fulfills a pre-set object criterion for each recorded duration during at least one execution of the industrial control program; and
performing (S112) the method (300) for detecting an intrusion into the industrial control system according to any one of claims 1 to 8.

15. A computer program product comprising instructions which, when the program is executed by a computer, cause the computer to carry out the method of any one of claims 10, 11, 12 or 14.

## Patentansprüche

1. Verfahren (300) zum Erkennen eines Eindringens in ein industrielles Steuersystem, das ein industrielles Steuerprogramm und eine industrielle Steuervorrichtung (510) beinhaltet, die für eine zyklusbasierte Ausführung des industriellen Steuerprogramms konfiguriert ist, wobei das Verfahren (300, S112) Folgendes beinhaltet:
Bereitstellen (S114) eines trainierten Datensatzes, der basierend auf mehreren vorherigen Datensätzen trainiert wird, wobei jeder Datensatz eine Kennung, die einen jeweiligen Prozess des industriellen Steuerprogramms angibt, und eine Dauer des Prozesses, die durch die Kennung angegeben wird, beinhaltet, wobei der Datensatz eingerichtet ist, eine erwartete Dauer eines Prozesses als Reaktion auf eine Abfrage, die die jeweilige Prozesskennung beinhaltet, auszugeben;
Durchführen (S200) der folgenden Schritte für jeden Prozess des industriellen Steuerprogramms in jedem Zyklus (500) einer Ausführung des industriellen Steuerprogramms:
Aufzeichnen (S214) einer Kennung, die den Prozess angibt;
Aufzeichnen (S212, S228) einer Dauer der Ausführung des Prozesses;
Abfragen (S238) der aufgezeichneten Kennung für den Datensatz;
Empfangen (S240) einer erwarteten Dauer des Prozesses, die durch die aufgezeichnete Kennung angegeben wird, von dem Datensatz; und
Erkennen (S244) eines Eindringens in das industrielle Steuersystem basierend auf einem Vergleichen (S242) der aufgezeichneten Dauer mit der erwarteten Dauer.

2. Verfahren (300) nach Anspruch 1, wobei die mehreren vorherigen Datensätze, auf denen das Trainieren (S243) des trainierten Datensatzes basiert, jeweils zusätzlich mindestens eine der folgenden Prozessinformationen beinhalten:
Eingabedaten für den Prozess, die durch die Kennung angegeben werden,
einen übergeordneten Indikator, der mindestens einen übergeordneten Prozess des Prozesses angibt, der durch die Kennung angegeben wird,
einen Unterbrechungsindikator, der angibt, ob der Prozess, der durch die Kennung angegeben wird, durch ein Unterbrechungssignal beendet wurde,
einen Ausführungserlaubnisindikator, der einen Benutzer angibt, der den Prozess besitzt, und/oder eine Ausführungserlaubnis, die dem Prozess gewährt wird, der durch die Kennung angegeben wird, und/oder
einen Dateisystemerlaubnisindikator, der eine Dateisystemschreiberlaubnis angibt, die dem Prozess gewährt wird, der durch die Kennung angegeben wird;
wobei der trainierte Datensatz eingerichtet ist, die erwartete Dauer als Reaktion auf eine Abfrage (S238), die die mindestens eine zusätzliche Prozessinformation beinhaltet, auszugeben;
wobei das Aufzeichnen (S212, S214, S228) das Aufzeichnen (S215, S216, S218, S219, S226) der mindestens einen zusätzlichen Prozessinformation beinhaltet; und
wobei das Abfragen (S238) die mindestens eine zusätzliche Prozessinformation beinhaltet.

3. Verfahren (300) nach einem der vorhergehenden Ansprüche, wobei das industrielle Steuerprogramm einen Parameterstapel (414) zum Speichern von Parameterwerten (PARA) und einen separaten Rückgabeadressenstapel (416) zum Speichern von Rückgabeadressen (RA) aufweist; und
wobei das industrielle Steuerprogramm Folgendes beinhaltet:
Initiieren (S220) eines untergeordneten Prozesses von einem übergeordneten Prozess, beinhaltend:
Speichern (S208) einer Rückgabeadresse, die eine Speicheradresse des übergeordneten Prozesses angibt, in dem Rückgabeadressenstapel (416), und
Speichern (S204), wenn der untergeordnete Prozess mit mindestens einem Parameter aufgerufen wird, aller Parameterwerte (PARA), die innerhalb des untergeordneten Prozesses zu verwenden sind, in dem Parameterstapel (414);
Beenden (S224) des untergeordneten Prozesses, beinhaltend:
Löschen (S230), wenn der untergeordnete Prozess mit mindestens einem Parameter aufgerufen wird, der Parameterwerte (PARA) des untergeordneten Prozesses aus dem Parameterstapel (414), und
Ziehen (S323) der Rückgabeadresse (RA) des untergeordneten Prozesses, die die Speicheradresse des übergeordneten Prozesses angibt, aus dem Rückgabeadressenstapel (416); und
Fortsetzen (S252) der Ausführung des industriellen Steuerprogramms an der Speicheradresse, die durch die gezogene Rückgabeadresse angegeben wird.

4. Verfahren (300) nach einem der vorhergehenden Ansprüche, wobei das industrielle Steuerprogramm einen Rückgabeadressenstapel (402, 416) zum Speichern mindestens einer Rückgabeadresse (RA) und einen Spiegelrückgabeadressenstapel (420) zum Spiegeln des Rückgabeadressenstapels (402, 416) aufweist;
wobei das industrielle Steuerprogramm Folgendes beinhaltet:
Initiieren (S202) eines untergeordneten Prozesses von einem übergeordneten Prozess, beinhaltend:
Speichern (S204) einer ursprünglichen Rückgabeadresse (RA), die eine Speicheradresse des übergeordneten Prozesses angibt, in dem Rückgabeadressenstapel (402, 416), und
Speichern (S208) einer Kopie der ursprünglichen Rückgabeadresse (RA) in dem Spiegelrückgabeadressenstapel (420);
Beenden (S224) des untergeordneten Prozesses, beinhaltend:
Ziehen (S232) der Rückgabeadresse (RA) aus dem Rückgabeadressenstapel (402, 416); und
Ziehen (S234) der Kopie der ursprünglichen Rückgabeadresse (RA) aus dem Spiegelrückgabeadressenstapel (420);
Vergleichen (S246) der gezogenen Rückgabeadresse (RA) mit der gezogenen Kopie der ursprünglichen Rückgabeadresse (RA); und
Erkennen (S250), wenn die gezogene Rückgabeadresse (RA) nicht mit der gezogenen Kopie der ursprünglichen Rückgabeadresse (RA) identisch ist, eines Eindringens in das industrielle Steuersystem.

5. Verfahren (300) nach Anspruch 3 oder 4, wobei das industrielle Steuerprogramm mindestens einen Dummy-Rückgabeadressenstapel (S422) aufweist, der jeweils zum Speichern einer Kopie des Rückgabeadressenstapels konfiguriert ist;
wobei das Initiieren (S202) des untergeordneten Prozesses beinhaltet:
Speichern (S210) jeder Kopie der Rückgabeadresse (RA) in jedem Dummy-Rückgabeadressenstapel (422).

6. Verfahren (300) nach einem der vorhergehenden Ansprüche, wobei die industrielle Steuervorrichtung konfiguriert ist, um ein Betriebssystem auszuführen, das für die zyklusbasierte Ausführung des industriellen Steuerprogramms konfiguriert ist;
wobei die Verfahrensschritte des Aufzeichnens (S212, S214, S228), des Abfragens (S238), des Empfangens (S240) und des Erkennens (S244) für jeden Prozess des Betriebssystems und des industriellen Steuerprogramms durchgeführt werden (S200); und
wobei die mehreren Datensätze, auf denen basierend der trainierte Datensatz trainiert wird, Datensätze jedes Prozesses des Betriebssystems und des industriellen Steuerprogramms beinhalten.

7. Verfahren (300) nach einem der vorhergehenden Ansprüche, wobei das Verfahren (300) Folgendes beinhaltet:
Bereitstellen einer Liste von Prozessen im sicheren Modus, die im Vergleich zu den aufgezeichneten Prozessen reduziert ist;
Durchführen (S118) nur von Prozessen aus der Liste von Prozessen im sicheren Modus, wenn ein Eindringen erkannt wird.

8. Verfahren (300) nach einem der vorhergehenden Ansprüche, wobei die industrielle Steuervorrichtung (510) konfiguriert ist, um mit mindestens einer anderen Vorrichtung (512, 514) über eine Netzwerkschnittstelle (516) zu kommunizieren, wobei das Verfahren (300) Folgendes beinhaltet:
Ausgeben (S116), wenn ein Eindringen erkannt wird, einer Warnung (518) über die Netzwerkschnittstelle (516), die ein Eindringen in das industrielle Steuersystem (510) anzeigt.

9. Computerprogrammprodukt, das Anweisungen umfasst, die, wenn das Programm von einem Computer ausgeführt wird, den Computer veranlassen, das Verfahren (300) nach einem der Ansprüche 1-8 auszuführen.

10. Verfahren zum Betreiben eines Satzes von mindestens zwei industriellen Steuervorrichtungen (510, 512, 514), die über ein Netzwerk miteinander verbunden sind,
wobei eine erste industrielle Steuervorrichtung (510) für eine zyklusbasierte Ausführung eines industriellen Steuerprogramms konfiguriert ist; wobei das Verfahren Folgendes beinhaltet:
Durchführen des Verfahrens (300) zum Erkennen eines Eindringens in ein industrielles Steuersystem nach Anspruch 8 durch die erste industrielle Steuervorrichtung (510); und
Durchführen einer Schutzmaßnahme durch mindestens eine weitere industrielle Steuervorrichtung (512, 514) beim Empfangen der Warnung (518), die ein Eindringen in die erste industrielle Steuervorrichtung (510) anzeigt, von der ersten industriellen Steuervorrichtung (510).

11. Verfahren (200) zum Trainieren eines Datensatzes zum Erkennen eines Eindringens in ein industrielles Steuersystem, das ein industrielles Steuerprogramm und eine industrielle Steuervorrichtung (510) beinhaltet, die für eine zyklusbasierte Ausführung des industriellen Steuerprogramms konfiguriert ist, wobei das Verfahren (200) Folgendes beinhaltet:
Aufzeichnen (S214, S212, S228) für jeden Prozess des industriellen Steuerprogramms in jedem Zyklus (500) während einer Ausführung des industriellen Steuerprogramms:
einer Kennung des Prozesses und
einer Dauer der Ausführung des Prozesses; und
Trainieren (S243) eines Datensatzes durch Bereitstellen mehrerer Datensätze, wobei jeder Datensatz eine Prozesskennung und die jeweilige Prozessdauer beinhaltet, wobei der Datensatz
eingerichtet ist, eine erwartete Dauer eines Prozesses als Reaktion auf eine Abfrage, die die jeweilige Prozesskennung beinhaltet, auszugeben,
wobei eine minimale Differenz zwischen der aufgezeichneten Dauer und der erwarteten Dauer als ein Trainingsobjekt verwendet wird.

12. Verfahren (200) nach Anspruch 11,
wobei das Aufzeichnen (S214, S212, S228) während der Ausführung (S100) des industriellen Steuerprogramms in einer Umgebung durchgeführt wird, die durch das industrielle Steuerprogramm gesteuert wird.

13. Trainierter Datensatz zum Erkennen eines Eindringens in ein industrielles Steuersystem, das ein industrielles Steuerprogramm und eine industrielle Steuervorrichtung beinhaltet, die für eine zyklusbasierte Ausführung des industriellen Steuerprogramms konfiguriert ist,
wobei Trainingsdaten für den Datensatz für jeden Prozess des industriellen Steuerprogramms in jedem Zyklus (500) während einer Ausführung des industriellen Steuerprogramms aufgezeichnet werden, die Folgendes beinhalten:
einer Kennung des Prozesses und
einer Dauer der Ausführung des Prozesses;
wobei der trainierte Datensatz durch Bereitstellen mehrerer Trainingsdaten erhalten wird,
wobei jeder Datensatz eine Prozesskennung und die jeweilige Prozessdauer beinhaltet,
wobei der trainierte Datensatz eingerichtet ist, eine erwartete Dauer eines Prozesses als Reaktion auf eine Abfrage, die die jeweilige Prozesskennung beinhaltet, auszugeben, und
wobei eine minimale Differenz zwischen der aufgezeichneten Dauer und der erwarteten Dauer als ein Trainingsobjekt verwendet wird.

14. Verfahren (100) zum Betreiben eines industriellen Steuersystems, das ein industrielles Steuerprogramm und eine industrielle Steuervorrichtung (510) beinhaltet, die für eine zyklusbasierte Ausführung eines industriellen Steuerprogramms konfiguriert ist,
wobei das Verfahren (100) Folgendes beinhaltet:
Durchführen (S104) des Verfahrens (200) zum Trainieren eines Datensatzes zum Erkennen eines Eindringens in ein industrielles Steuersystem nach einem der Ansprüche 11 bis 12;
Beenden (S110) des Verfahrens (200) zum Trainieren des Datensatzes, wenn ein Vergleich zwischen der aufgezeichneten Dauer und der erwarteten Dauer ein voreingestelltes Objektkriterium für jede aufgezeichnete Dauer während mindestens einer Ausführung des industriellen Steuerprogramms erfüllt; und
Durchführen (S112) des Verfahrens (300) zum Erkennen eines Eindringens in das industrielle Steuersystem nach einem der Ansprüche 1 bis 8.

15. Computerprogrammprodukt, das Anweisungen umfasst, die, wenn das Programm von einem Computer ausgeführt wird, den Computer veranlassen, das Verfahren nach einem der Ansprüche 10, 11, 12 oder 14 auszuführen.

## Revendications

1. Procédé (300) de détection d'une intrusion dans un système de contrôle industriel comprenant un programme de contrôle industriel et un dispositif de contrôle industriel (510), qui est configuré pour une exécution basée sur un cycle du programme de contrôle industriel, dans lequel le procédé (300, S112) comprend :
la fourniture (S114) d'un ensemble de données formé, qui est formé sur la base de multiples enregistrements précédents, chaque enregistrement comprenant un identifiant indicatif d'un processus respectif du programme de contrôle industriel et une durée du processus indiquée par l'identifiant, dans lequel l'ensemble de données est configuré pour délivrer une durée attendue d'un processus en réponse à une interrogation comprenant l'identifiant de processus respectif ;
l'exécution (S200) pour chaque processus du programme de contrôle industriel dans chaque cycle (500) d'une exécution du programme de contrôle industriel :
de l'enregistrement (S214) d'un identifiant indicatif du processus ;
de l'enregistrement (S212, S228) d'une durée de l'exécution du processus ;
de l'interrogation (S238) de l'identifiant enregistré pour l'ensemble de données ;
de la réception (S240) à partir de l'ensemble de données d'une durée attendue du processus indiquée par l'identifiant enregistré ; et
de la détection (S244) d'une intrusion dans le système de contrôle industriel sur la base de la comparaison (S242) de la durée enregistrée avec la durée attendue.

2. Procédé (300) selon la revendication 1, dans lequel les multiples enregistrements précédents, sur lesquels le formation (S243) de l'ensemble de données formé est basé, comprennent chacun en outre au moins l'une des informations de processus suivantes :
des données d'entrée pour le processus indiqué par l'identifiant,
un indicateur parent indicatif d'au moins un processus parent du processus indiqué par l'identifiant,
un indicateur d'interruption indicatif du fait que le processus indiqué par l'identifiant a été terminé par un signal d'interruption,
un indicateur de permission d'exécution indicatif d'un utilisateur possédant le processus et/ou d'une permission d'exécution accordée au processus indiqué par l'identifiant, et/ou
un indicateur de permission de système de fichiers indicatif d'une permission d'écriture de système de fichiers accordée au processus indiqué par l'identifiant ;
dans lequel l'ensemble de données formé est configuré pour délivrer la durée attendue en réponse à une interrogation (S238) comprenant l'au moins une information de processus supplémentaire ;
dans lequel l'enregistrement (S212, S214, S228) comprend l'enregistrement (S215, S216, S218, S219, S226) de l'au moins une information de processus supplémentaire ; et
dans lequel l'interrogation (S238) comprend l'au moins une information de processus supplémentaire.

3. Procédé (300) selon l'une quelconque des revendications précédentes, dans lequel le programme de commande industriel a une pile de paramètres (414) pour stocker des valeurs de paramètres (PARA) et une pile d'adresses de retour séparée (416) pour stocker des adresses de retour (RA) ; et
dans lequel le programme de commande industriel comprend :
le lancement (S220) d'un processus enfant à partir d'un processus parent, comprenant :
le stockage (S208) d'une adresse de retour indicative d'une adresse de mémoire du processus parent dans la pile d'adresses de retour (416), et
le stockage (S204), si le processus enfant est appelé avec au moins un paramètre, de toutes les valeurs de paramètres (PARA) à utiliser dans le processus enfant dans la pile de paramètres (414) ;
la terminaison (S224) du processus enfant, comprenant :
la suppression (S230), si le processus enfant est appelé avec au moins un paramètre, des valeurs de paramètres (PARA) du processus enfant à partir de la pile de paramètres (414), et
le tirage (S323) de l'adresse de retour (RA) du processus enfant indicative de l'adresse de mémoire du processus parent à partir de la pile d'adresses de retour (416) ; et
la poursuite (S252) de l'exécution du programme de contrôle industriel à l'adresse de mémoire indiquée par l'adresse de retour tirée.

4. Procédé (300) selon l'une quelconque des revendications précédentes, dans lequel le programme de commande industriel a une pile d'adresses de retour (402, 416) pour stocker au moins une adresse de retour (RA), et une pile d'adresses de retour miroir (420) pour refléter la pile d'adresses de retour (402, 416) ;
dans lequel le programme de commande industriel comprend :
le lancement (S202) d'un processus enfant à partir d'un processus parent, comprenant :
le stockage (S204) d'une adresse de retour d'origine (RA) indicative d'une adresse de mémoire du processus parent dans la pile d'adresses de retour (402, 416), et
le stockage (S208) d'une copie de l'adresse de retour d'origine (RA) dans la pile d'adresses de retour miroir (420) ;
la terminaison (S224) du processus enfant, comprenant :
le tirage (S232) de l'adresse de retour (RA) à partir de la pile d'adresses de retour (402, 416) ; et
le tirage (S234) de la copie de l'adresse de retour d'origine (RA) à partir de la pile d'adresses de retour miroir (420) ;
la comparaison (S246) de l'adresse de retour tirée (RA) avec la copie tirée de l'adresse de retour d'origine (RA) ; et
la détection (S250), si l'adresse de retour tirée (RA) n'est pas identique à la copie tirée de l'adresse de retour d'origine (RA), d'une intrusion dans le système de contrôle industriel.

5. Procédé (300) selon la revendication 3 ou 4, dans lequel le programme de commande industriel a au moins une pile d'adresses de retour factice (S422), chacune configurée pour stocker une copie de la pile d'adresses de retour ;
dans lequel le lancement (S202) du processus enfant comprend :
le stockage (S210) de chaque copie de l'adresse de retour (RA) dans chaque pile d'adresses de retour factice (422).

6. Procédé (300) selon l'une quelconque des revendications précédentes, dans lequel le dispositif de contrôle industriel est configuré pour exécuter un système d'exploitation qui est configuré pour ladite exécution basée sur un cycle du programme de contrôle industriel ;
dans lequel les étapes de procédé dudit enregistrement (S212, S214, S228), de ladite interrogation (S238), de ladite réception (S240), et de ladite détection (S244) sont exécutées (S200) pour chaque processus du système d'exploitation et du programme de contrôle industriel ; et
dans lequel les multiples enregistrements, sur la base desquels l'ensemble de données formé est formé sur la base, comprennent des enregistrements de chaque processus du système d'exploitation et du programme de contrôle industriel.

7. Procédé (300) selon l'une quelconque des revendications précédentes, dans lequel le procédé (300) comprend :
la fourniture d'une liste de processus en mode sûr, qui est réduite par rapport aux processus qui sont enregistrés ;
l'exécution (S118) uniquement de processus à partir de la liste de processus en mode sûr si une intrusion est détectée.

8. Procédé (300) selon l'une quelconque des revendications précédentes, dans lequel le dispositif de contrôle industriel (510) est configuré pour communiquer avec au moins un autre dispositif (512, 514) via une interface réseau (516), dans lequel le procédé (300) comprend :
l'émission (S116), si une intrusion est détectée, d'un avertissement (518) via l'interface réseau (516) indicatif d'une intrusion dans le système de contrôle industriel (510).

9. Produit de programme informatique comprenant des instructions qui, lorsque le programme est exécuté par un ordinateur, amènent l'ordinateur à réaliser le procédé (300) selon l'une des revendications 1 à 8.

10. Procédé d'exploitation d'un ensemble d'au moins deux dispositifs de contrôle industriel (510, 512, 514), qui sont connectés l'un à l'autre via un réseau,
dans lequel un premier dispositif de contrôle industriel (510) est configuré pour une exécution basée sur un cycle d'un programme de contrôle industriel ; dans lequel le procédé comprend :
l'exécution par le premier dispositif de contrôle industriel (510) du procédé (300) de détection d'une intrusion dans un système de contrôle industriel selon la revendication 8 ; et
l'exécution par au moins un autre dispositif de contrôle industriel (512, 514) d'une mesure de protection lors de la réception à partir du premier dispositif de contrôle industriel (510) de l'avertissement (518) indicatif d'une intrusion dans le premier dispositif de contrôle industriel (510).

11. Procédé (200) d'apprentissage d'un ensemble de données pour détecter une intrusion dans un système de contrôle industriel comprenant un programme de contrôle industriel et un dispositif de contrôle industriel (510), qui est configuré pour une exécution basée sur un cycle du programme de contrôle industriel, dans lequel le procédé (200) comprend :
l'enregistrement (S214, S212, S228) pour chaque processus du programme de contrôle industriel dans chaque cycle (500) pendant une exécution du programme de contrôle industriel :
d'un identifiant du processus, et
d'une durée de l'exécution du processus ; et
l'apprentissage (S243) d'un ensemble de données en fournissant de multiples enregistrements, chaque enregistrement comprenant un identifiant de processus et la durée de processus respective, dans lequel l'ensemble de données est configuré pour délivrer une durée attendue d'un processus en réponse à une interrogation comprenant l'identifiant de processus respectif,
dans lequel une différence minimale entre la durée enregistrée et la durée attendue est utilisée comme un objet d'apprentissage.

12. Procédé (200) selon la revendication 11,
dans lequel l'enregistrement (S214, S212, S228) est exécuté pendant l'exécution (S100) du programme de contrôle industriel dans un environnement contrôlé par le programme de contrôle industriel.

13. Ensemble de données entraîné pour détecter une intrusion dans un système de contrôle industriel comprenant un programme de contrôle industriel et un dispositif de contrôle industriel, qui est configuré pour une exécution basée sur un cycle du programme de contrôle industriel,
dans lequel des données d'apprentissage pour l'ensemble de données sont enregistrées pour chaque processus du programme de contrôle industriel dans chaque cycle (500) pendant une exécution du programme de contrôle industriel comprenant :
un identifiant du processus, et
une durée de l'exécution du processus ;
dans lequel l'ensemble de données entraîné est obtenu en fournissant de multiples données d'apprentissage
un enregistrement, chaque enregistrement comprenant un identifiant de processus et la durée de processus respective,
dans lequel l'ensemble de données entraîné est configuré pour délivrer une durée attendue d'un processus en réponse à une interrogation comprenant l'identifiant de processus respectif, et
dans lequel une différence minimale entre la durée enregistrée et la durée attendue est utilisée comme un objet d'apprentissage.
Revendications

14. Procédé (100) d'exploitation d'un système de contrôle industriel comprenant un programme de contrôle industriel et un dispositif de contrôle industriel (510), qui est configuré pour une exécution basée sur un cycle d'un programme de contrôle industriel,
dans lequel le procédé (100) comprend :
l'exécution (S104) du procédé (200) d'apprentissage d'un ensemble de données pour détecter une intrusion dans un système de contrôle industriel selon l'une quelconque des revendications 11 à 12 ;
la terminaison (S110) du procédé (200) d'apprentissage de l'ensemble de données, si une comparaison entre la durée enregistrée et la durée attendue remplit un critère d'objet préétabli pour chaque durée enregistrée pendant au moins une exécution du programme de contrôle industriel ; et
l'exécution (S112) du procédé (300) de détection d'une intrusion dans le système de contrôle industriel selon l'une quelconque des revendications 1 à 8.

15. Produit de programme informatique comprenant des instructions qui, lorsque le programme est exécuté par un ordinateur, amènent l'ordinateur à réaliser le procédé selon l'une quelconque des revendications 10, 11, 12 ou 14.
